# FASCICULE DE BREVET EUROPEEN

(11) **EP 4 077 104 B1**
(45) Date de publication et mention de la délivrance du brevet: **14.02.2024**
(21) Numéro de dépôt: 20816531.6
(22) Date de dépôt: 07.12.2020
(51) Int. Cl.: B62D 25/02, B60R 22/24

(54) **TABLETTE STRUCTURELLE POUR VÉHICULE AUTOMOBILE**
STRUKTURREGAL FÜR EIN KRAFTFAHRZEUG
STRUCTURAL SHELF FOR A MOTOR VEHICLE

(30) Priorité: 19.12.2019 FR 1915018
(43) Date de publication de la demande: 26.10.2022
(73) Titulaire: Renault s.a.s, 92100 Boulogne Billancourt (FR); NISSAN MOTOR Co., Ltd., Yokohama-shi, Kanagawa 221-0023 (JP)
(72) Inventeur: RANC, Maximilien, 78000 VERSAILLES (FR); VASSOS, Céline, 94440 VILLECRESNES (FR)
(74) Mandataire: Renault Group
(86) Numéro de dépôt international: PCT/EP2020/084852
(87) Numéro de publication internationale: WO 2021/122097

(56) Documents cités:
- CN-A- 106 347 470
- CN-B- 106 494 513
- DE-A1-102008 061 370
- FR-A1- 2 987 014

## Description

L'invention se situe dans le domaine technique des véhicules, notamment automobiles, et concerne une tablette structurelle, pouvant être destinée à supporter un enrouleur de ceinture de sécurité disposée à l'intérieur d'un véhicule, notamment pour passager arrière.

Dans le domaine de l'automobile, la partie arrière d'un véhicule comprend de nombreux éléments assemblés entre eux et ayant des rôles et des géométries variés. Parmi ces éléments, nous pouvons citer le passage de roue arrière intérieur. Le passage de roue arrière intérieur est une tôle formant la cloison latérale disposée entre la cavité destinée à recevoir une roue arrière du véhicule et l'intérieur du véhicule, généralement une partie de l'habitacle et/ou du coffre. Il est généralement constitué d'un seul panneau en tôle. L'aspect monobloc du passage de roue contribue à sa robustesse. Il est obtenu par emboutissage.

Le côté de caisse est l'ensemble des éléments latéraux fixes, formant le cadre et constituant les encadrements des portes.

Enfin le pied arrière du véhicule est le montant situé à l'arrière du véhicule du côté de caisse.

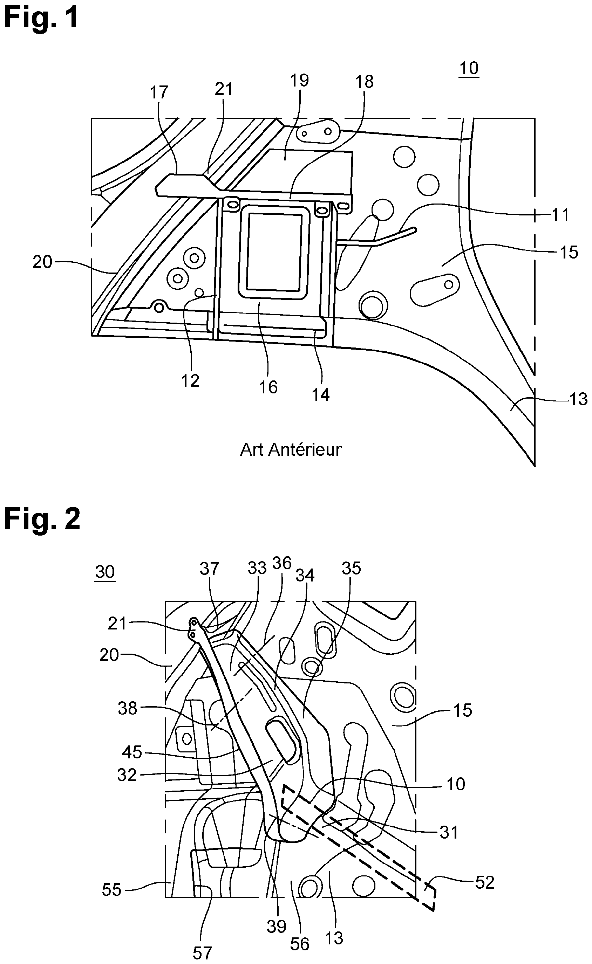

Ces pièces sont assemblées les unes aux autres par des procédés adaptés, par exemple par soudage. La structure ainsi obtenue peut être utilisée pour créer des surfaces d'accroche.
Par exemple, la figure 1 représente un support 10 d'enrouleur 11 de ceinture de sécurité positionné dans la zone arrière de l'habitacle, à proximité d'un montant de structure de la caisse du véhicule. Le support 10 comprend un socle 12 fixé au passage de roue arrière 13 au niveau de la surface 14. Le socle 12 est également fixé sur le côté de caisse 15 au niveau de sa surface 16. Le socle 12 est ainsi fixé solidairement au passage de roue arrière et à la caisse, comme cela est également décrit dans CN106347470A. La fixation du socle 12 sur le passage de roue 13 et sur le côté de caisse 15 se fait sur toute la surface de contact avec le socle 12 et nécessite donc, dans l'exemple d'assemblage par soudage, l'application de points de soudage sur le pourtour des surfaces de contact. Le support 10 comprend également une pièce d'attache 17 comprenant une surface 18 s'étendant selon un plan sensiblement parallèle au plan horizontal du véhicule. La surface 18 de la pièce d'attache 17 est fixée à la surface supérieure du socle 12. La pièce d'attache 17 comprend également une surface latérale 19 s'étendant sensiblement perpendiculairement au plan de la surface 18. La pièce d'attache 17 est fixée sur le côté de caisse 15 au niveau de sa surface 18. Enfin la pièce d'attache 17 constitue un point d'accroche dans le pied arrière 20 du véhicule au niveau de la zone 21. Le support 10 est ainsi rigidement fixé au passage de roue arrière, au côté de caisse et au pied arrière et contribue à rigidifier la caisse du véhicule.

Un enrouleur 11 peut être fixé sur une paroi latérale du socle 12 dans un plan sensiblement parallèle au plan horizontal du véhicule. En cas de choc, l'effort de retenue du passager par la ceinture de sécurité est transmis au support 10 et réparti au passage de roue arrière, au côté de caisse et au pied arrière assurant ainsi la bonne retenue de l'enrouleur.

Toutefois, ce type de support présente plusieurs inconvénients. Il est composé de deux pièces, c'est-à-dire qu'il nécessite la fabrication de deux pièces distinctes qu'il faut ensuite assembler et fixer à la caisse du véhicule. Les surfaces de contact entre les deux pièces et entre le support et la caisse nécessitent en outre de nombreux points de fixation (par exemple par soudage). Il en résulte une complexification de l'assemblage.

L'invention vise à pallier tout ou partie des problèmes cités plus haut en proposant une tablette structurelle dont la fonction est de rigidifier la caisse du véhicule. Une telle tablette assure une liaison mécanique du pied arrière au passage de roue arrière. En outre, la tablette structurelle de l'invention peut servir de supporteur à l'enrouleur de ceinture de sécurité pour un passager arrière.

A cet effet, l'invention a pour objet une tablette pour véhicule automobile, destinée à être fixée entre un pied arrière, une surface supérieure d'un passage de roue arrière et un côté de caisse dudit véhicule automobile, la tablette comprenant une unique pièce comprenant :
a. une zone centrale s'étendant sensiblement selon un plan central, ladite zone centrale étant délimitée par un pourtour ;
b. un contour s'étendant en tout point du pourtour selon une direction sécante, préférentiellement perpendiculaire, au plan central.

Avantageusement, le contour comprend :
a. une surface arrière destinée à être fixée au pied arrière ;
b. une surface inférieure, opposée à la surface arrière par rapport à la zone centrale, destinée à être fixée au passage de roue arrière ;
c. une surface latérale extérieure destinée à être fixée au côté de caisse du véhicule ;
d. une surface latérale intérieure, opposée à la surface latérale extérieure par rapport à la zone centrale.

Avantageusement, la surface latérale intérieure comprend au moins une ouverture.

Avantageusement, la tablette comprend en outre au moins une nervure de rigidification.

Avantageusement, la tablette comprend en outre une zone de fixation d'un enrouleur de ceinture de sécurité.

L'invention concerne aussi un ensemble de carrosserie pour véhicule automobile comprenant :
a. un pied arrière s'étendant sensiblement selon un premier plan ;
b. un passage de roue arrière comprenant une surface supérieure s'étendant selon un deuxième plan sécant au premier plan ;
c. un côté de caisse s'étendant selon un troisième plan sensiblement perpendiculaire au premier plan et au deuxième plan ;
l'ensemble de carrosserie comprenant en outre une tablette selon l'invention entre le pied arrière, la surface supérieure du passage de roue arrière et le côté de caisse, et le plan central forme un angle de 40 à 50°, préférentiellement 45°, avec le pied arrière.

Avantageusement, le passage de roue arrière comprend une pièce latérale arrière, une pièce latérale avant et une pièce centrale, la pièce centrale étant positionnée entre la pièce latérale arrière et la pièce latérale avant, interchangeable selon le train roulant du véhicule, et la tablette est fixée à la pièce latérale avant.

L'invention concerne aussi un procédé de fabrication d'une tablette pour véhicule automobile telle que décrite prédécemment, dans lequel la tablette est réalisée par emboutissage.

L'invention concerne également un procédé d'assemblage par soudage d'une tablette telle que décrite prédécemment au véhicule automobile, ledit procédé comprenant une étape de soudage du contour au pied arrière, à la surface supérieure du passage de roue arrière et au côté de caisse du véhicule automobile.

Enfin l'invention concerne un véhicule automobile caractérisé en ce qu'il comprend un tel ensemble de carrosserie.

L'invention sera mieux comprise et d'autres avantages apparaîtront à la lecture de la description détaillée d'un mode de réalisation donné à titre d'exemple, description illustrée par le dessin joint dans lequel :
La figure 1, décrite précédemment, représente schématiquement un support d'enrouleur de ceinture de sécurité de l'art antérieur ;
La figure 2 représente schématiquement une vue de l'implantation d'une tablette fixée au passage de roue arrière, au côté de caisse et au pied arrière du véhicule selon l'invention ;
La figure 3 représente schématiquement une autre vue d'une tablette selon l'invention ;
La figure 4 représente schématiquement une vue en transparence de la tablette selon l'invention présentée à la figure 3.

Sur ces figures, dans un souci de clarté, les échelles ne sont pas respectées d'une figure à une autre. Par ailleurs, les mêmes éléments porteront les mêmes repères dans les différentes figures. En outre, les termes « avant » et « arrière » sont à comprendre par rapport à l'orientation générale du véhicule. Le terme « avant » désigne un positionnement vers le devant du véhicule selon une direction horizontale. Le terme « arrière » désigne un positionnement vers l'arrière du véhicule selon la direction horizontale précédemment mentionnée.

Le passage de roue arrière intérieur concerne la pièce formant la cloison latérale disposée entre l'espace pour accueillir une roue arrière du véhicule et l'intérieur du véhicule. Dans ce qui suit, et afin de simplifier la formulation du terme, le passage de roue arrière intérieur sera désigné par « passage de roue arrière ».

La figure 1 représente schématiquement un support 10 d'enrouleur 11 de ceinture de sécurité de l'art antérieur. Elle a été décrite précédemment.

La figure 2 représente schématiquement une vue de l'implantation d'une tablette 30 fixée au passage de roue arrière 13, au côté de caisse 15 et au pied arrière 20 du véhicule selon l'invention. L'invention porte sur la tablette 30 pour véhicule automobile, destinée à être fixée entre le pied arrière 20, une surface supérieure 31 du passage de roue arrière 13 et le côté de caisse 15 dudit véhicule automobile. Selon l'invention, la tablette 30 comprend une unique pièce comprenant une zone centrale 32 s'étendant sensiblement selon un plan central 33, ladite zone centrale 32 étant délimitée par un pourtour 34, et un contour 35 s'étendant en tout point du pourtour 34 selon une direction sécante 36 (ou par exemple aussi 37, 38, 39 selon le point du pourtour 34 considéré), préférentiellement perpendiculaire, au plan central 33. Autrement dit, le contour 35 s'élève depuis la périphérie de la zone centrale 32 sensiblement perpendiculairement à la zone centrale 32 ; le contour 35 et la zone centrale 32 ne formant qu'une seule et même pièce.

La tablette 30 selon l'invention présente l'avantage d'être une pièce obtenue par emboutissage. Il s'agit d'une mono-pièce, c'est-à-dire une tablette monobloc, non pliée. La zone centrale 32 de la tablette 30 assure la rigidité de l'ensemble de la structure formé par le pied arrière et le passage de roue, comme il sera expliqué ci-dessous. Le contour 35 qui s'étend depuis la zone centrale 32 dans une direction sécante au plan central 33 de la zone centrale 32 offre à la tablette 30 des surfaces de fixation destinées à être fixées au pied arrière 20 au niveau de la zone 21, au côté de caisse 15 et à la surface supérieure 31 du passage de roue arrière 13.

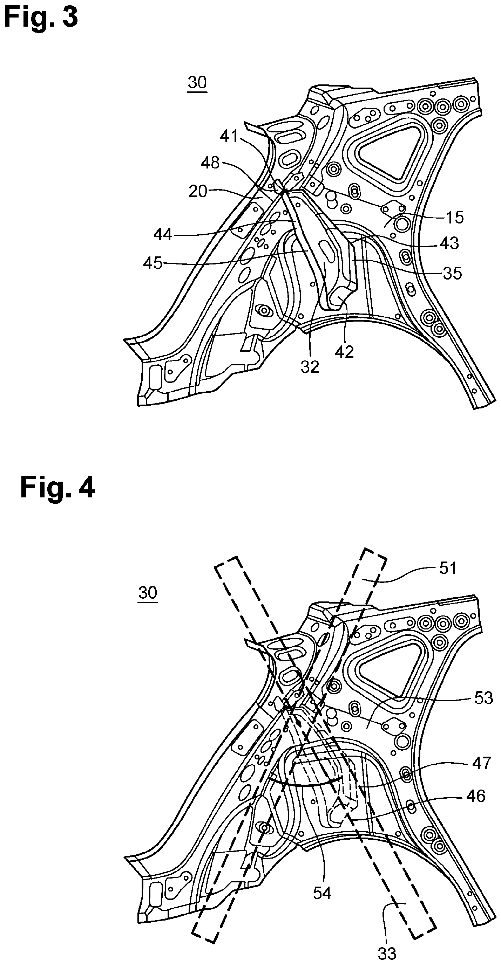

La figure 3 représente schématiquement une autre vue d'une tablette 30 selon l'invention. Dans cette vue, le passage de roue arrière n'est pas représenté.

Le contour 35 comprend une surface arrière 41 destinée à être fixée au pied arrière 20.

Le contour 35 comprend une surface inférieure 42, opposée à la surface arrière 41 par rapport à la zone centrale 32, destinée à être fixée au passage de roue arrière 13. La surface inférieure 42 peut présenter une portion courbée sensiblement plane, comme la surface supérieure du passage de roue arrière sur laquelle elle vient s'appuyer, de sorte à augmenter la surface d'appui entre la tablette 30 et le passage de roue 13.

Le contour 35 comprend une surface latérale extérieure 43 destinée à être fixée au côté de caisse 15 du véhicule.

Le contour 35 comprend une surface latérale intérieure 44, opposée à la surface latérale extérieure 43 par rapport à la zone centrale 32.

Les deux surfaces latérales (extérieure et intérieure) 43, 44 peuvent comprendre un prolongement vers l'arrière selon une direction sensiblement perpendiculaire à la direction 36, 38. Le prolongement de la surface latérale intérieure 44 porte la référence 48. Ces deux prolongements et la surface arrière 41 assurent le rôle de surface de contact entre la tablette 30 et le pied arrière 20 et représentent des zones de fixations de la tablette 30 au pied arrière 20.

Avantageusement, la surface latérale intérieure 44 comprend au moins une ouverture 45. L'ouverture 45 permet la fixation d'accessoires, par exemple une garniture de coffre par un moyen de fixation adapté tel qu'un clip de fixation.

La figure 4 représente schématiquement une vue en transparence de la tablette 30 selon l'invention présentée à la figure 3.

La tablette 30 peut comprendre en outre au moins une nervure de rigidification 46. La ou les nervures de rigidification 46 permettent d'augmenter la tenue de la tablette 30 à la déformation en cas de choc.

Avantageusement, la tablette 30 comprend en outre une zone de fixation 47 d'un enrouleur de ceinture de sécurité.

L'invention concerne aussi un ensemble de carrosserie 50 pour véhicule automobile comprenant :
a. un pied arrière 20 s'étendant sensiblement selon un premier plan 51 ;
b. un passage de roue arrière 13 comprenant une surface supérieure 31 s'étendant selon un deuxième plan 52 sécant au premier plan 51 ;
c. un côté de caisse 15 s'étendant selon un troisième plan 53 (représenté sur la figure 2 pour une meilleure visibilité) sensiblement perpendiculaire au premier plan 51 et au deuxième plan 52 ;
d. une tablette 30 telle que décrite précédemment et fixée entre le pied arrière 20, la surface supérieure 31 du passage de roue arrière 13 et le côté de caisse 15. Et le plan central 33 forme un angle (référence 54) de 40 à 50°, préférentiellement 45°, avec le pied arrière 20.

La tablette 30 est donc une pièce monobloc permettant de rigidifier la caisse du véhicule. La tablette 30 assure la liaison mécanique du pied arrière 20 au passage de roue 13. La tablette 30 est une pièce de structure, inclinée par rapport au pied de caisse 20, préférentiellement de sensiblement 45° sur toute sa hauteur. En d'autres termes, la tablette 30 constitue un pied d'équerrage pour lier le pied arrière 20 au passage de roue arrière 13 et aide le pied arrière 20 à supporter les efforts lors d'un crash.

La tablette 30 est particulièrement avantageuse dans le cas où le passage de roue arrière 13 n'est pas monobloc. En effet, pour des raisons de facilité d'assemblage sur la chaîne de montage du véhicule, il est judicieux de considérer un passage de roue en trois parties. Le passage de roue arrière comprend, dans une partie centrale 57 du passage de roue, une zone de fixation pour permettre sa fixation sur le palier du train roulant arrière du véhicule. Le palier du train roulant est un organe mécanique qui permet d'assurer la liaison entre la caisse et l'essieu arrière du véhicule, l'essieu arrière étant relié aux roues arrière du véhicule. La zone de fixation est donc adaptée pour assurer la liaison avec le palier de train roulant. Or, comme le train roulant peut être différent d'un véhicule à l'autre, il en résulte une pluralité de formes de passage de roue arrière. Un passage de roue en trois parties, contrairement à un passage de roue arrière de l'art antérieur qui est monobloc, comprend ainsi deux parties latérales 55, 56 de forme standard et identique pour tout type de train roulant à monter sur le véhicule et une partie centrale interchangeable qui, elle, varie selon le type de train roulant à monter sur le véhicule. Lors du montage du passage de roue arrière, l'opérateur assemble les deux parties latérales du passage de roue et il doit seulement adapter la partie centrale à assembler. Le montage s'en trouve ainsi facilité. Néanmoins, un tel passage de roue arrière en trois parties ne permet plus d'assurer la rigidité nécessaire d'un ensemble de carrosserie de l'art antérieur tel que décrit à la figure 1. En effet, le passage de roue arrière en trois parties présente alors une surface supérieure qui varie selon le type de train roulant. Il n'est plus possible de fixer le socle 12 sur le passage de roue comme pratiqué dans l'art antérieur. Et même en adaptant la forme du socle 12 et de sa fixation sur le passage de roue, un effort provenant de la ceinture de sécurité lors d'un choc provoquerait un arrachement du socle 12 et de la pièce d'attache 17.

La tablette 30 selon l'invention permet de résoudre ce problème grâce à la liaison qu'elle crée entre le pied arrière 20 et le passage de roue 13. La tablette 30 est sensiblement plane et orientée à sensiblement 45° par rapport au pied arrière. Elle forme également un angle avec la surface supérieure 31 du passage de roue 13. Dans le cas d'un passage de roue en trois parties, la tablette 30 est fixée sur la partie latérale avant 56 (dans le sens du véhicule). Autrement dit, même en présence d'un passage de roue en trois parties, la tablette 30 contribue à rigidifier la caisse du véhicule. En cas de crash, l'équerrage formé entre le pied arrière 20, la tablette 30 et le passage de roue 13 aide le pied arrière 20 à supporter les efforts.

Le rôle majeur de la tablette 30 est donc de relier le pied arrière 20 et le passage de roue 13 avec un rôle structurel améliorant la tenue de l'ensemble de carrosserie 50. La tablette 30 peut avoir le rôle complémentaire de support d'un enrouleur de ceinture de sécurité. Dans ce cas, l'enrouleur de ceinture de sécurité peut être positionné sur la zone centrale 32 et fixé à la tablette 30 au niveau de la zone de fixation 47 prévue à cet effet.

L'invention concerne aussi un procédé de fabrication d'une tablette 30 pour véhicule automobile dans lequel la tablette est réalisée par emboutissage.

L'invention concerne également un procédé d'assemblage par soudage d'une tablette 30 au véhicule automobile, ledit procédé comprenant une étape de soudage du contour 35 au pied arrière 20, à la surface supérieure 31 du passage de roue arrière 13 et au côté de caisse 15 du véhicule automobile.

Le soudage peut être réalisé par la combinaison d'une forte intensité électrique et d'une pression ponctuelle entre le contour 35 de la tablette 30 et le côté de caisse 15, le pied arrière 20, le passage de roue 13. Ce procédé ne nécessite pas d'apport extérieur. L'intensité électrique chauffe la matière jusqu'à la fusion. La pression maintient le contact entre l'électrode et l'assemblage.

Plus précisément, et comme on peut apercevoir, au moins en partie, sur la figure 2, le contour 35 permet de fixer la tablette 30 à la caisse par soudage par points. Selon les portions du contour 35 sur lesquelles les points de soudage sont appliqués, deux ou trois feuilles sont à souder entre elles. Par exemple, au niveau de la surface arrière 41, il s'agit de soudage par point à trois épaisseurs correspondant à l'épaisseur du contour 35, de l'épaisseur du pied arrière 20 et de l'épaisseur du renfort du pied arrière 20.

Au niveau de la surface latérale extérieure 43, le soudage par point est à deux ou à trois épaisseurs selon les portions de la surface 43 du contour 35 qui sont à souder. Dans la partie haute, au niveau de la doublure de custode, il s'agit de soudage par point à deux épaisseurs. Dans la zone intermédiaire, le soudage par point est à deux épaisseurs dans le cas d'un passage de roue monobloc. Par contre, dans le cas d'un passage de roue arrière en trois parties, le soudage par point est à trois épaisseurs. En effet, il faut souder le contour 35 à la partie intermédiaire du passage de roue arrière et à la partie latérale avant du passage de roue arrière. Sur la partie avant du passage de roue, quel que soit le type de passage de roue arrière (monobloc ou en trois parties), le soudage par point est à deux épaisseurs (contour 35 et passage de roue arrière). L'assemblage par soudage peut se faire, selon les zones concernées, avec une ou deux rangées de points de soudage, comme représenté sur la figure 2 (chaque boule représentant un point de soudage).

Au niveau de la surface inférieure 42, l'assemblage se fait préférentiellement avec deux rangées de points de soudage. La rangée la plus en avant dans le sens du véhicule est à deux épaisseurs (celle du contour 35 et celle du passage de roue). La rangée la plus en arrière est soit à deux épaisseurs dans le cas d'un passage de roue arrière monobloc, soit à trois épaisseurs dans le cas d'un passage de roue arrière en trois parties (pour tenir compte de l'épaisseur du contour 35 et de l'empilement de la partie latérale avant et de la partie intermédiaire du passage de roue arrière).

Enfin l'invention concerne un véhicule automobile comprenant un ensemble de carrosserie 50.

## Revendications

1. Tablette (30) pour véhicule automobile, destinée à être fixée entre un pied arrière (20), une surface supérieure (31) d'un passage de roue arrière (13) et un côté de caisse (15) dudit véhicule automobile, **caractérisée en ce que** la tablette (30) comprend une unique pièce comprenant :
a. une zone centrale (32) s'étendant sensiblement selon un plan central (33), ladite zone centrale (32) étant délimitée par un pourtour (34) ;
b. un contour (35) s'étendant en tout point du pourtour (34) selon une direction sécante (36, 37, 38, 39), préférentiellement perpendiculaire, au plan central (33).

2. Tablette (30) selon la revendication 1, dans laquelle le contour (35) comprend :
a. une surface arrière (41) destinée à être fixée au pied arrière (20) ;
b. une surface inférieure (42), opposée à la surface arrière (41) par rapport à la zone centrale (32), destinée à être fixée au passage de roue arrière (13) ;
c. une surface latérale extérieure (43) destinée à être fixée au côté de caisse (15) du véhicule ;
d. une surface latérale intérieure (44), opposée à la surface latérale extérieure (43) par rapport à la zone centrale (32).

3. Tablette (30) selon la revendication 2, dans laquelle la surface latérale intérieure (44) comprend au moins une ouverture (45).

4. Tablette (30) selon l'une quelconque des revendications 1 à 3, comprenant en outre au moins une nervure de rigidification (46).

5. Tablette (30) selon l'une quelconque des revendications 1 à 4, comprenant en outre une zone de fixation (47) d'un enrouleur de ceinture de sécurité.

6. Ensemble de carrosserie (50) pour véhicule automobile comprenant :
a. un pied arrière (20) s'étendant sensiblement selon un premier plan (51) ;
b. un passage de roue arrière (13) comprenant une surface supérieure (31) s'étendant selon un deuxième plan (52) sécant au premier plan (51) ;
c. un côté de caisse (15) s'étendant selon un troisième plan (53) sensiblement perpendiculaire au premier plan (51) et au deuxième plan (52) ;
**caractérisé en ce qu'**il comprend en outre une tablette (30) selon l'une quelconque des revendications 1 à 5 fixée entre le pied arrière (20), la surface supérieure (31) du passage de roue arrière (13) et le côté de caisse (15),
et **en ce que** le plan central (33) forme un angle de 40 à 50°, préférentiellement 45°, avec le pied arrière (20).

7. Ensemble de carrosserie (50) selon la revendication 6, dans lequel le passage de roue arrière (13) comprend une pièce latérale arrière (55), une pièce latérale avant (56) et une pièce centrale (57), la pièce centrale (57) étant positionnée entre la pièce latérale arrière (55) et la pièce latérale avant (56), interchangeable selon le train roulant du véhicule, et en ce que la tablette (30) est fixée à la pièce latérale avant (56).

8. Procédé de fabrication d'une tablette (30) pour véhicule automobile selon l'une quelconque des revendications 1 à 5, dans lequel la tablette (30) est réalisée par emboutissage.

9. Procédé d'assemblage par soudage d'une tablette selon l'une quelconque des revendications 1 à 5 au véhicule automobile, ledit procédé comprenant une étape de soudage du contour (35) au pied arrière (20), à la surface supérieure (31) du passage de roue arrière (13) et au côté de caisse (15) du véhicule automobile.

10. Véhicule automobile **caractérisé en ce qu'**il comprend un ensemble de carrosserie selon la revendication 6 ou 7.

## Patentansprüche

1. Ablage (30) für ein Kraftfahrzeug, die dazu bestimmt ist, zwischen einem hinteren Fuß (20), einer oberen Fläche (31) eines hinteren Radkastens (13) und einer Karosserieseite (15) des Kraftfahrzeugs befestigt zu sein, **dadurch gekennzeichnet, dass** die Ablage (30) ein einziges Teil umfasst, das Folgendes umfasst:
a. einen mittleren Bereich (32), der sich im Wesentlichen entlang einer Mittelebene (33) erstreckt, wobei der mittlere Bereich (32) durch einen Umfang (34) begrenzt ist;
b. eine Kontur (35), die sich an jedem Punkt des Umfangs (34) entlang einer Sekantenrichtung (36, 37, 38, 39), vorzugsweise senkrecht, zur Mittelebene (33) erstreckt.

2. Ablage (30) nach Anspruch 1, wobei die Kontur (35) Folgendes umfasst:
a. eine hintere Fläche (41), die dazu bestimmt ist, am hinteren Fuß (20) befestigt zu sein;
b. eine untere Fläche (42), die der hinteren Fläche (41) in Bezug auf den mittleren Bereich (32) gegenüberliegt und dazu bestimmt ist, am hinteren Radkasten (13) befestigt zu sein;
c. eine äußere Seitenfläche (43), die dazu bestimmt ist, an der Karosserieseite (15) des Fahrzeugs befestigt zu sein;
d. eine innere Seitenfläche (44), die der äußeren Seitenfläche (43) in Bezug auf den mittleren Bereich (32) gegenüberliegt.

3. Ablage (30) nach Anspruch 2, wobei die innere Seitenfläche (44) mindestens eine Öffnung (45) umfasst.

4. Ablage (30) nach einem der Ansprüche 1 bis 3, ferner umfassend mindestens eine Versteifungsrippe (46).

5. Ablage (30) nach einem der Ansprüche 1 bis 4, ferner umfassend einen Bereich (47) zur Befestigung eines Sicherheitsgurtaufrollers.

6. Karosseriebaugruppe (50) für ein Kraftfahrzeug, umfassend:
a. einen hinteren Fuß (20), der sich im Wesentlichen entlang einer ersten Ebene (51) erstreckt;
b. einen hinteren Radkasten (13), der eine obere Fläche (31) umfasst, die sich entlang einer zweiten Ebene (52) erstreckt, die die erste Ebene (51) schneidet;
c. eine Karosserieseite (15), die sich entlang einer dritten Ebene (53) erstreckt, die im Wesentlichen senkrecht zur ersten Ebene (51) und zur zweiten Ebene (52) verläuft;
**dadurch gekennzeichnet, dass** sie ferner eine Ablage (30) nach einem der Ansprüche 1 bis 5 umfasst, die zwischen dem hinteren Fuß (20), der oberen Fläche (31) des hinteren Radkastens (13) und der Karosserieseite (15) befestigt ist,
und dass die Mittelebene (33) einen Winkel von 40 bis 50°, vorzugsweise 45°, mit dem hinteren Fuß (20) bildet.

7. Karosseriebaugruppe (50) nach Anspruch 6, wobei der hintere Radkasten (13) ein hinteres Seitenteil (55), ein vorderes Seitenteil (56) und ein Mittelteil (57) umfasst, wobei das Mittelteil (57) zwischen dem hinteren Seitenteil (55) und dem vorderen Seitenteil (56) positioniert und je nach Fahrgestell des Fahrzeugs austauschbar ist, und wobei die Ablage (30) am vorderen Seitenteil (56) befestigt ist.

8. Verfahren zur Fertigung einer Ablage (30) für ein Kraftfahrzeug nach einem der Ansprüche 1 bis 5, wobei die Ablage (30) durch Tiefziehen gefertigt wird.

9. Verfahren zum Verschweißen einer Ablage nach einem der Ansprüche 1 bis 5 mit dem Kraftfahrzeug, wobei das Verfahren einen Schritt des Verschweißens der Kontur (35) mit dem hinteren Fuß (20), der oberen Fläche (31) des hinteren Radkastens (13) und der Karosserieseite (15) des Kraftfahrzeugs umfasst.

10. Kraftfahrzeug, **dadurch gekennzeichnet, dass** es eine Karosseriebaugruppe nach Anspruch 6 oder 7 umfasst.

## Claims

1. Shelf (30) for a motor vehicle, intended to be fixed between a rear pillar (20), an upper surface (31) of a rear wheel arch (13) and a bodyshell side (15) of said motor vehicle, **characterized in that** the shelf (30) comprises a single part comprising:
a. a central area (32) extending substantially on a central plane (33), said central area (32) being delimited by a perimeter (34);
b. a contour (35) extending at all points on the perimeter (34) in a direction (36, 37, 38, 39) which intersects, and is preferably perpendicular to, the central plane (33).

2. Shelf (30) according to Claim 1, wherein the contour (35) comprises:
a. a rear surface (41) intended to be fixed to the rear pillar (20);
b. a lower surface (42), which is opposite to the rear surface (41) with respect to the central area (32) and is intended to be fixed to the rear wheel arch (13);
c. an outer lateral surface (43) intended to be fixed to the bodyshell side (15) of the vehicle;
d. an inner lateral surface (44), which is opposite to the outer lateral surface (43) in relation to the central area (32).

3. Shelf (30) according to Claim 2, wherein the inner lateral surface (44) comprises at least one opening (45).

4. Shelf (30) according to any one of Claims 1 to 3, further comprising at least one stiffening rib (46).

5. Shelf (30) according to any one of Claims 1 to 4, further comprising a fixing area (47) for fixing a seat belt winder.

6. Bodywork assembly (50) for a motor vehicle, comprising:
a. a rear pillar (20) extending substantially on a first plane (51);
b. a rear wheel arch (13) comprising an upper surface (31) extending in a second plane (52) which intersects the first plane (51);
c. a bodyshell side (15) extending on a third plane (53) substantially perpendicular to the first plane (51) and to the second plane (52);
**characterized in that** it further comprises a shelf (30) according to any one of Claims 1 to 5 fixed between the rear pillar (20), the upper surface (31) of the rear wheel arch (13) and the bodyshell side (15),
and **in that** the central plane (33) forms an angle of 40 to 50°, preferably 45°, with the rear pillar (20).

7. Bodywork assembly (50) according to Claim 6, wherein the rear wheel arch (13) comprises a rear lateral part (55), a front lateral part (56) and a central part (57), the central part (57) being positioned between the rear lateral part (55) and the front lateral part (56) and being interchangeable depending on the running gear of the vehicle, and in that the shelf (30) is fixed to the front lateral part (56).

8. Method for manufacturing a shelf (30) for a motor vehicle according to any one of Claims 1 to 5, wherein the shelf (30) is produced by stamping.

9. Method for joining a shelf according to any one of Claims 1 to 5 to the motor vehicle by welding, said method comprising a step of welding the contour (35) to the rear pillar (20), to the upper surface (31) of the rear wheel arch (13) and to the bodyshell side (15) of the motor vehicle.

10. Motor vehicle, **characterized in that** it comprises a bodywork assembly according to Claim 6 or 7
